# EUROPEAN PATENT SPECIFICATION

(11) **EP 2 658 081 B1**
(45) Date of publication and mention of the grant of the patent: **20.04.2016**
(21) Application number: 13155693.8
(22) Date of filing: 18.02.2013
(51) Int. Cl.: H02M 3/158, H02J 1/10, H02J 7/00, H02J 7/34, H02J 9/06

(54) **System and method for providing hold-up power to a load**
System und Verfahren zur Versorgung einer Last mit Stillstandsleistung
Système et procédé pour fournir de l'énergie de maintien à une charge

(30) Priority: 26.04.2012 US 201213456859
(43) Date of publication of application: 30.10.2013
(73) Proprietor: Hamilton Sundstrand Corporation, Windsor Locks, CT 06096-1010 (US)
(72) Inventor: Schmidt, Dennis E., San Diego, CA California 92128 (US); Cogsdill, Lawrence A., San Diego, CA California 92124 (US)
(74) Representative: Hughes, Andrea Michelle

(56) References cited:
- JP-A- 2007 108 192
- US-A1- 2003 230 334
- US-A1- 2010 026 263
- US-B1- 6 232 752

## Description

### BACKGROUND

The present invention is related to power interrupts, and in particular to a system and method for providing hold-up power during a power interrupt.

Power interrupts often occur on aircraft systems due to, for example, transfer of power between a battery and a primary generator. These systems, including auxiliary power unit (APU) systems, are required to operate through these power interrupts. Several approaches have been used to meet this requirement. For example, permanent magnet generators (PMGs) have been installed on APUs to provide back-up power to the APUs' control electronics. This implementation adds significant cost, weight, complexity and circuitry to the APU.

Alternately, controlled flameout has been used to handle power interrupts for APU electronics. Controlled flameout involves extinguishing a flame in the combustor when a power interrupt occurs. This is done in order to eliminate the need for the APU electronic controls during the power interrupt. When power is restored following the interrupt, the APU re-lights the combustor and resumes operation. Utilizing a controlled flameout requires a complex system approach which necessitates vigorous system level testing to ensure reliability.

Additionally, bulk capacitors have been added to the system to provide hold-up power during an interrupt. Traditionally, an input voltage is simply applied to a capacitor, and stored until a power interrupt occurs. During the power interrupt, the voltage stored on the capacitor is directly used to power the APU's electronic controls and other external loads. As the length of the interrupt increases, the size of the capacitance must increase. These capacitors are heavy and add significant cost to the design of the APU system.
In JP 2007108102 A, an auxiliary power supply is disclosed for powering an auxiliary light-emitting diode (LED) of a camera. The auxiliary power supply includes voltage step-up and voltage step-down circuits for powering the auxiliary LED.
In US 2010/0026263 A1, an integrated controller is disclosed for powering a voltage converter. The voltage converter includes a buck circuit and boost circuit. The buck and boost circuits are controllable by the integrated controller to adjust the output of the voltage converter.
In US 6,232,752 B1, a DC/DC converter is disclosed that includes a boost circuit and a buck circuit. Pulse-width modulation is utilized to control both the boost circuit and the buck circuit to provide a desired output voltage regardless of the input voltage level.

### SUMMARY

A system and method for providing hold-up power includes a power source, one or more loads, a boost circuit, a capacitor, and a buck circuit. The boost circuit boosts an input voltage from the power source, the capacitor stores a boosted voltage from the boost circuit, and the buck circuit steps down a voltage from the capacitor. The buck circuit provides a stepped down voltage to the one or more loads when the power source is unavailable.

### BRIEF DESCRIPTION OF THE DRAWINGS

FIG. 1 is a block diagram illustrating a power hold-up system according to an embodiment of the present invention.
FIG. 2 is a flowchart illustrating a power hold-up method according to an embodiment of the present invention.

### DETAILED DESCRIPTION

The present invention describes a system and method for providing hold-up power during a power interrupt. The system includes a boost circuit, a storage capacitor, and a buck circuit. The boost circuit receives a direct current (DC) input voltage from a primary power source. This primary power source is also used to power loads during normal system operation. The boost circuit boosts the input voltage to a stepped up output voltage that is provided to charge the storage capacitor during normal system operation. By stepping up the voltage using the boost circuit, the capacitor charges to a higher voltage, therefore storing more energy. Upon loss of power from the primary power source, the storage capacitor is discharged through the load in order to provide hold-up power to the load. The buck circuit steps down the voltage from the storage capacitor and provides the stepped down voltage to the load.

The energy stored in a capacitor is equal to ½ (C)(V²), where C is the value of capacitance of the storage capacitor, and V is the value of voltage across the storage capacitor. During a power interrupt, the amount of energy drawn from the storage capacitor is dependent upon the load. Some external loads act like a simple resistance. Thus, the higher the load voltage, the higher the current draw and therefore, the higher the required energy. By boosting the voltage from the primary power source from the typical 28 volts to a higher voltage and lowering the output voltage delivered to the load during the power interrupt, the required capacitance of the storage capacitor can be greatly reduced. Therefore, by adding the boost circuit and buck circuit to the system, the necessary capacitance to provide hold-up power for a given time to the load is reduced. Because boost circuits and buck circuits have become relatively light, inexpensive and reliable this greatly reduces the overall weight and cost of the system.

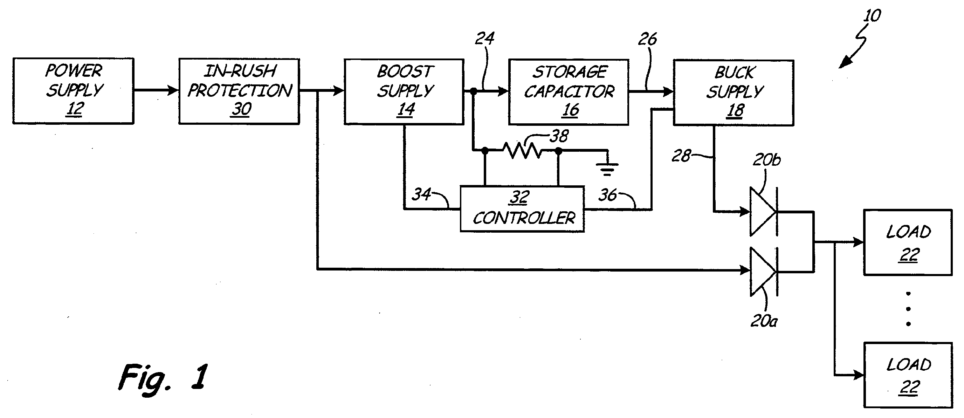

FIG. 1 is a block diagram illustrating a power hold-up system 10 according to an embodiment of the present invention. System 10 includes primary power source 12, boost circuit 14, storage capacitor 16, buck circuit 18, diodes 20a and 20b, loads 22, boost output line 24, buck input line 26, buck output line 28, in-rush circuit 30, controller 32, boost circuit enable line 34, buck circuit enable line 36, and reference resistor 38. Primary power source 12 is any source of primary power, such as an electrical generator driven by an engine of an aircraft. In-rush circuit 30 limits the inrush current to system 10 and is any in-rush current protection circuit known in the art. Storage capacitor 16 is any storage capacitor known in the art such as, for example, an aluminum electrolytic capacitor. Controller 32 may be implemented as a microcontroller such as, for example, a field-programmable gate array (FPGA).

Boost circuit 14, storage capacitor 16, and buck circuit 18 operate to provide hold-up power to loads 22 during normal system operation. Normal system operation is any time that power interrupt protection must be provided to loads 22. For example, if system 10 is an APU system, normal system operation involves the APU running at an operational speed. During normal system operation, controller 32 enables boost circuit 14 and buck circuit 18 using boost circuit enable line 34 and buck circuit enable line 36 respectively. Boost circuit 14 steps up the DC voltage from primary power source 12. This stepped up voltage is used to charge storage capacitor 16. Boost circuit 14 may be implemented in a number of ways, all of which are known in the art. Boost circuit 14 may step up the voltage, for example, from an input of 28 volts to an output of 48 volts. Storage capacitor 16 is charged up to the voltage on boost output line 24. The capacitor remains charged while primary power source 12 is providing power to system 10.

Buck circuit 18 steps down the voltage across storage capacitor 16. Buck circuit 18 may be implemented in a number of ways, all of which are known in the art. The voltage may be stepped down, for example, from 48 volts to 12 volts. The value of the stepped down voltage is selected to provide loads 22 with a functional voltage while minimizing the power dissipation through loads 22 during a power interrupt. The stepped down voltage will typically be lesser than the voltage provided by primary power source 12. Because of this, diodes 20a and 20b can be used to diode OR buck output line 28 and primary power source 12. During normal system operation, primary power source 12 will provide a voltage larger than the voltage on buck output line 28, forward biasing diode 20a, and therefore providing primary power to loads 22. When primary power source 12 is unavailable, the voltage on buck output line 28 will be larger than the voltage provided by primary power source 12, forward biasing diode 20b, and therefore providing voltage to loads 22 from buck circuit 18.

The amount of time for which power can be provided to loads 22 from storage capacitor 16 is based upon the energy stored in storage capacitor 16 and the power dissipation of loads 22. Because energy is equal to power multiplied by time, _{½}(C)(V²) = (P)(t), where P is the power dissipated by loads 22 and t is time. Thus, the amount of time for which storage capacitor 16 can provide power to loads 22 is equal to (C)(V²)/(2P). Prior hold-up circuits simply charged the capacitor to the input voltage of, for example, 28 volts and then provided that 28 volts to the loads during a power interrupt. This results in a necessary capacitance of approximately .067 farads in order to accommodate a 220 millisecond interrupt. Boosting the voltage such that the capacitor charges to 48 volts, and stepping the voltage of storage capacitor 16 down to 12 volts, results in a necessary capacitance of approximately .0067 farads for a 220 millisecond interrupt. Reducing the required capacitance in this way allows the weight and cost of system 10 to be greatly reduced.

Controller 32 is used in conjunction with reference resistor 38 to test the functionality of storage capacitor 16. This test can be done at any time when power interrupt protection is not required for system 10. If system 10 is an APU system, for example, the test may be performed during startup of the APU. Certain capacitors, such as aluminum electrolytic capacitors must be tested regularly to ensure proper functionality. To test storage capacitor 16, controller 32 disables boost circuit 14 and buck circuit 18 using boost circuit enable line 34 and buck circuit enable line 36 respectively. When both boost circuit 14 and buck circuit 18 are disabled, storage capacitor 16 will discharge through reference resistor 38 to ground. Controller 32 monitors the voltage across reference resistor 38 during discharge of storage capacitor 16. Because the value of resistance of reference resistor 38 is known, controller 32 can monitor the amount of time it takes for the voltage across reference resistor 38 to drop a predetermined amount. This allows controller 32 to calculate the actual capacitance of storage capacitor 16 in order to ensure its proper functionality.

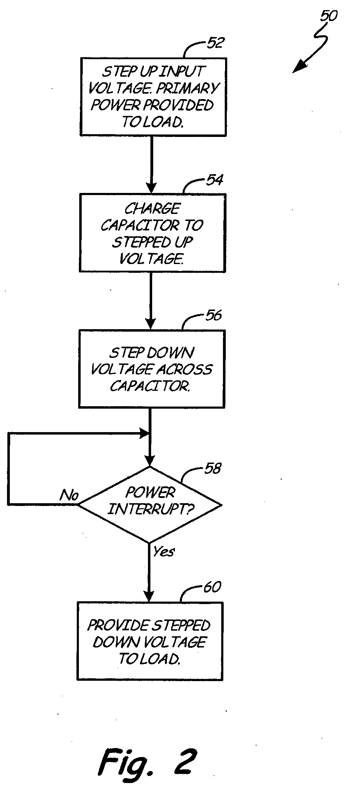

FIG. 2 is a flowchart illustrating method 50 for providing hold-up power to one or more loads according to an embodiment of the present invention. At step 52, the voltage of primary power source 12 is stepped up to a boosted voltage that is provided on boost output line 24. Power is provided to loads 22 from primary power source 12. At step 54, storage capacitor 16 is charged to the voltage on boost output line 24. At step 56, the voltage across capacitor 16, provided on buck input line 26, is stepped down to a bucked voltage by buck circuit 18. This bucked voltage is provided on buck output line 28. Method 50 remains at step 58 until a power interrupt occurs. At step 60, power is provided to loads 22 from buck output line 28.

In this way, the present invention describes a system and method for providing hold-up power during a power interrupt. Although the present invention has been described with reference to preferred embodiments, workers skilled in the art will recognize that changes may be made in form and detail without departing from the scope of the invention which is defined by the claims.

## Claims

1. A circuit for providing backup power to one or more loads when a power source is unavailable, the circuit comprising:
a boost supply (14) for boosting an input voltage;
a capacitor (16) for storing energy based upon voltage provided from the boost supply; and
a buck supply (18) for reducing voltage received from the capacitor to supply a reduced backup voltage from the buck circuit when power from the power source is unavailable; said circuit further comprising:
a first diode (20a) for connecting the input voltage to the one or more loads when the power source is available; and
a second diode (20b) for connecting the reduced backup voltage to the one or more loads when the power source is unavailable.

2. The circuit of claim 1, wherein the reduced backup voltage is less than the input voltage when power from the power source is available.

3. The circuit of claim 1 or 2, further comprising an in-rush circuit (30) connected between the input voltage and the boost supply to limit in-rush current from the power source.

4. The circuit of claim 1, 2 or 3, further comprising:
a test resistor (38) connected between the capacitor and ground, wherein the capacitor discharges through the test resistor when the circuit is in a test mode; and
a controller (32) for measuring a voltage across the test resistor during discharge of the capacitor in order to test the functionality of the capacitor when the circuit is in the test mode.

5. A power system comprising:
a power source (12);
one or more loads (22) that receive power from the power source; and a circuit as claimed in any preceding claim connected to supply the reduced backup voltage to the one or more loads when power from the power source is unavailable.

6. The system of claim 5, wherein the input voltage is a direct current (DC) voltage.

7. The system of claim 5 or 6, wherein the voltage provided from the boost supply is approximately 48 volts.

8. The system of claim 5, 6 or 7, wherein the reduced backup voltage is approximately 12 volts.

9. The system of claim 5, 6, 7 or 8, wherein a capacitance of the capacitor is large enough to provide sufficient power to the one or more loads for a time greater than 220 milliseconds based upon the voltage provided from the boost supply and the reduced backup voltage.

10. A method of operating a power system, comprising:
stepping up an input voltage from a power source using a boost circuit;
storing a stepped up voltage from the boost circuit using a capacitor;
stepping down a stored voltage from the capacitor using a buck circuit; and
providing a stepped down voltage from the buck circuit to one or more loads when power from the power source is unavailable; and wherein
providing a stepped down voltage from the buck circuit to the one or more loads when the power source is unavailable comprises:
providing power through a first diode to the one or more loads from the power source when power from the power source is available; and
providing power through a second diode to the one or more loads from the buck circuit when power from the power source is unavailable.

11. The method of claim 10, wherein the input voltage is greater than the stepped down voltage.

12. The method of claim 10 or 11, wherein the input voltage is a direct current (DC) voltage.

13. The method of claim 10, 11 or 12, wherein the stepped up voltage is approximately 48 volts; and/or wherein the stepped down voltage is approximately 12 volts.

## Patentansprüche

1. Stromkreis zum Bereitstellen von Reservestrom für eine oder mehrere Lasten, wenn eine Stromquelle nicht verfügbar ist, wobei der Stromkreis Folgendes umfasst:
eine Verstärkungsversorgung (14) zum Verstärken einer Eingangsspannung;
einen Kondensator (16) zum Speichern von Energie auf der Basis der von der Verstärkungsversorgung bereitgestellten Spannung; und
eine Buck-Versorgung (18) zum Verringern der von dem Kondensator erhaltenen Spannung, um eine verringerte Reservespannung von dem Buck-Stromkreis zuzuführen, wenn Strom von der Stromquelle nicht verfügbar ist; wobei der Stromkreis weiterhin Folgendes umfasst:
eine erste Diode (20a) zum Verbinden der Eingangsspannung mit der einen oder den mehreren Lasten, wenn die Stromquelle verfügbar ist; und
eine zweite Diode (20b) zum Verbinden der verringerten Reservespannung mit der einen oder den mehreren Lasten, wenn die Stromquelle nicht verfügbar ist.

2. Stromkreis nach Anspruch 1, wobei die verringerte Reservespannung kleiner als die Eingangsspannung ist, wenn Strom von der Stromquelle verfügbar ist.

3. Stromkreis nach Anspruch 1 oder 2, weiterhin umfassend einen Einschaltstromkreis (30), der zwischen der Eingangsspannung und der Verstärkungsversorgung angeschlossen ist, um den Einschaltstrom von der Stromquelle zu begrenzen.

4. Stromkreis nach Anspruch 1, 2 oder 3, weiterhin umfassend:
einen Testwiderstand (38), der zwischen dem Kondensator und Erde angeschlossen ist, wobei sich der Kondensator durch den Testwiderstand entlädt, wenn sich der Stromkreis in einem Testmodus befindet; und
eine Steuerung (32) zum Messen einer Spannung am Testwiderstand während der Entladung des Kondensators, um die Funktionalität des Kondensators zu testen, wenn sich der Stromkreis im Testmodus befindet.

5. Stromsystem, umfassend:
eine Stromquelle (12);
eine oder mehrere Lasten (22), die Strom von der Stromquelle erhalten; und ein Stromkreis nach einem der vorangegangenen Ansprüche, der zum Zuführen der verringerten Reservespannung zu der einen oder den mehreren Lasten verbunden ist, wenn Strom von der Stromquelle nicht verfügbar ist.

6. System nach Anspruch 5, wobei die Eingangsspannung eine Gleichstromspannung (DC) ist.

7. System nach Anspruch 5 oder 6, wobei die von der Verstärkungsversorgung bereitgestellte Spannung etwa 48 Volt beträgt.

8. System nach Anspruch 5, 6 oder 7, wobei die verringerte Reservespannung etwa 12 Volt beträgt.

9. System nach Anspruch 5, 6, 7 oder 8, wobei eine Kapazität des Kondensators groß genug ist, um auf der Basis von der durch die Verstärkungsversorgung bereitgestellten Spannung und der verringerten Reservespannung ausreichend Strom für die eine oder die mehreren Lasten für eine Zeit bereitzustellen, die größer als 220 Millisekunden ist.

10. Verfahren zum Betrieb eines Stromsystems, umfassend:
Erhöhen einer Eingangsspannung von einer Stromquelle unter Verwendung eines Verstärkungsstromkreises;
Speichern einer erhöhten Spannung von dem Verstärkungsstromkreis unter Verwendung eines Kondensators;
Herabsetzen einer gespeicherten Spannung von dem Kondensator unter Verwendung eines Buck-Stromkreises; und
Bereitstellen einer herabgesetzten Spannung von dem Buck-Stromkreis für eine oder mehrere Lasten, wenn der Strom von der Stromquelle nicht verfügbar ist; und wobei
Bereitstellen einer herabgesetzten Spannung von dem Buck-Stromkreis für eine oder mehrere Lasten, wenn der Strom nicht verfügbar ist, Folgendes umfasst:
Bereitstellen von Strom über eine erste Diode für die eine oder die mehreren Lasten von der Stromquelle, wenn Strom von der Stromquelle verfügbar ist; und
Bereitstellen von Strom über eine zweite Diode für die eine oder die mehreren Lasten von dem Buck-Stromkreis, wenn Strom von der Stromquelle nicht verfügbar ist.

11. Verfahren nach Anspruch 10, wobei die Eingangsspannung größer als die herabgesetzte Spannung ist.

12. Verfahren nach Anspruch 10 oder 11, wobei die Eingangsspannung eine Gleichstromspannung (DC) ist.

13. Verfahren nach Anspruch 10, 11 oder 12, wobei die erhöhte Spannung etwa 48 Volt beträgt; und/oder wobei die herabgesetzte Spannung etwa 12 Volt beträgt.

## Revendications

1. Circuit permettant de fournir une alimentation de secours à une ou plusieurs charges lorsqu'une source d'alimentation n'est pas disponible, le circuit comprenant :
une alimentation d'amplification (14) pour amplifier une tension d'entrée ;
un condensateur (16) pour stocker de l'énergie en fonction de la tension fournie par l'alimentation d'amplification ; et
une alimentation d'abaissement (18) pour réduire la tension reçue du condensateur afin de fournir une tension de secours réduite provenant du circuit abaisseur lorsque l'énergie provenant de la source d'alimentation n'est pas disponible ; ledit circuit comprenant en outre :
une première diode (20a) pour connecter la tension d'entrée à l'une ou plusieurs charges lorsque la source d'alimentation est disponible ; et
une seconde diode (20b) pour connecter la tension de secours réduite à l'une ou plusieurs charges lorsque la source d'alimentation n'est pas disponible.

2. Circuit selon la revendication 1, dans lequel la tension de secours réduite est inférieure à la tension d'entrée lorsque l'énergie provenant de la source d'alimentation est disponible.

3. Circuit selon les revendications 1 ou 2, comprenant en outre un circuit d'appel (30) connecté entre la tension d'entrée et l'alimentation d'amplification pour limiter le courant d'appel provenant de la source d'alimentation.

4. Circuit selon les revendications 1, 2 ou 3, comprenant en outre :
une résistance d'essai (38) connectée entre le condensateur et la terre, le condensateur se déchargeant au travers de la résistance d'essai lorsque le circuit est en mode d'essai ; et
un régulateur (32) pour mesurer la tension aux bornes de la résistance d'essai pendant la décharge du condensateur afin de tester la fonctionnalité du condensateur lorsque le circuit est en mode d'essai.

5. Système d'alimentation comprenant :
une source d'alimentation (12) ;
une ou plusieurs charges (22) qui reçoivent de l'énergie provenant de la source d'alimentation ; et un circuit selon l'une quelconque des revendications précédentes connecté pour fournir la tension de secours réduite à l'une ou plusieurs charges lorsque l'énergie provenant de la source d'alimentation n'est pas disponible.

6. Système selon la revendication 5, dans lequel la tension d'entrée est une tension de courant continu (CC).

7. Système selon les revendications 5 ou 6, dans lequel la tension fournie par l'alimentation d'amplification est d'environ 48 volts.

8. Système selon les revendications 5, 6 ou 7, dans lequel la tension de secours réduite est d'environ 12 volts.

9. Système selon les revendications 5, 6, 7 ou 8, dans lequel la capacité du condensateur est suffisamment élevée pour fournir une quantité d'énergie suffisante à l'une ou plusieurs charges pendant une durée supérieure à 220 millisecondes en fonction de la tension fournie par l'alimentation d'amplification et la tension de secours réduite.

10. Procédé de fonctionnement d'un système d'alimentation, comprenant :
l'augmentation de la tension d'entrée provenant d'une source d'alimentation au moyen d'un circuit amplificateur ;
le stockage d'une tension augmentée provenant du circuit amplificateur au moyen d'un condensateur ;
la réduction d'une tension stockée provenant du condensateur au moyen d'un circuit abaisseur ; et
la fourniture d'une tension réduite provenant du circuit abaisseur à une ou plusieurs charges lorsque l'énergie provenant de la source d'alimentation n'est pas disponible ; et dans lequel
la fourniture d'une tension réduite provenant du circuit abaisseur à l'une ou plusieurs charges lorsque la source d'alimentation n'est pas disponible comprend :
la fourniture d'énergie au travers d'une première diode à l'une ou plusieurs charges par la source d'alimentation lorsque l'énergie provenant de la source d'alimentation est disponible ; et
la fourniture d'énergie au travers d'une seconde diode à l'une ou plusieurs charges par le circuit abaisseur lorsque l'énergie provenant de la source d'alimentation n'est pas disponible.

11. Procédé selon la revendication 10, dans lequel la tension d'entrée est supérieure à la tension réduite.

12. Procédé selon les revendications 10 ou 11, dans lequel la tension d'entrée est une tension de courant continu (CC).

13. Procédé selon les revendications 10, 11 ou 12, dans lequel la tension augmentée est d'environ 48 volts ; et/ou dans lequel la tension réduite est d'environ 12 volts.
